# EUROPÄISCHE PATENTSCHRIFT

(11) **EP 4 166 310 B1**
(45) Veröffentlichungstag und Bekanntmachung des Hinweises auf die Patenterteilung: **17.07.2024**
(21) Anmeldenummer: 21202352.7
(22) Anmeldetag: 13.10.2021
(51) Int. Cl.: B29D 30/54

(54) **VERFAHREN UND VORRICHTUNG ZUM PRÄPARIEREN DER OBERFLÄCHE DER KARKASSE EINES FAHRZEUGLUFTREIFENS IM ZUGE EINER RUNDERNEUERUNG DESSELBEN**
METHOD AND DEVICE FOR PREPARING THE SURFACE OF THE CARCASS OF A PNEUMATIC VEHICLE TYRE IN THE COURSE OF RETREADING SAID TYRE
PROCÉDÉ ET DISPOSITIF DE PRÉPARATION DE LA SURFACE DE LA CARCASSE D'UN PNEUMATIQUE DE VÉHICULE AUTOMOBILE EN COURS DE SON RECHAPAGE

(43) Veröffentlichungstag der Anmeldung: 19.04.2023
(73) Patentinhaber: Bandvulc Tyres Limited, Devon PL21 9LN (GB)
(72) Erfinder: Mailling, Antony, 30165 Hannover (DE)
(74) Vertreter: Ramseger, Alexander

(56) Entgegenhaltungen:
- EP-B1- 3 551 443
- US-A1- 2017 173 907
- US-A1- 2017 176 175

## Beschreibung

Die Erfindung betrifft ein Verfahren zum Präparieren der Oberfläche der Karkasse eines Fahrzeugluftreifens im Zuge einer Runderneuerung desselben, umfassend die Schritte des Entfernens des Laufstreifens und der Seitenwand des Fahrzeugluftreifens unter Freilegung der Karkasse und des Aufspannens des Fahrzeugluftreifens auf eine drehbare Nabe sowie des anschließenden Absuchens der freigelegten Oberfläche der Karkasse auf Oberflächenschäden während einer Rotation des Fahrzeugluftreifens, wobei bei Auffinden eines Oberflächenschadens die Rotation des Fahrzeugluftreifens vorübergehend gestoppt und mittels eines von einem Roboter geführten Schleifwerkzeuges der ermittelte Oberflächenschaden unter Erzeugung einer Vertiefung in der Oberfläche der Karkasse entfernt wird und anschließend die Rotation des Fahrzeugluftreifens und das Absuchen der Oberfläche auf Oberflächenschäden fortgesetzt wird, bis ein vollständiger Umlauf des Fahrzeugluftreifens auf der drehbaren Nabe absolviert ist und die Oberflächenschäden entfernt sind.

Die Erfindung betrifft ferner auch eine entsprechende Vorrichtung zum Präparieren der Oberfläche der Karkasse eines Fahrzeugluftreifens im Zuge einer Runderneuerung desselben, umfassend eine drehbare Nabe, auf der ein Fahrzeugluftreifen mit durch Entfernung von Laufstreifen und Seitenwänden freigelegter Karkasse aufspannbar und auf Oberflächenschäden während einer Rotation des Fahrzeugluftreifens absuchbar ist sowie ein von einem Roboter geführtes Schleifwerkzeug zum Ausschleifen der ermittelten Oberflächenschäden unter Erzeugung einer Vertiefung in der Oberfläche der Karkasse.

Fahrzeugluftreifen für Lastkraftwagen, Personenkraftwagen sowie Lieferwagen, die nach Erreichen der Verschleißgrenze für eine Runderneuerung in Frage kommen, weisen ein üblicherweise abgefahrenes Profil im Bereich des Laufstreifens und gegebenenfalls beschädigte Seitenwände auf, die mechanisch entfernt werden, um die Karkasse des Fahrzeugluftreifens freizulegen, auf die nachfolgend ein neuer Laufstreifen sowie Seitenwände aufgebracht werden. Dies kann beispielsweise in Form von rohen oder vorvulkanisierten und auf die Karkasse aufgebrachten Gummistreifen erfolgen, die nachfolgend in einem Vulkanisierprozess ausgehärtet und mit der darunter befindlichen Karkasse verbunden werden.

Nachdem der verschlissene Laufstreifen sowie die Seitenwände mechanisch entfernt worden sind, werden die Oberflächen der Karkasse im Bereich des Scheitels, der Seitenwände und der Wulstbereiche einem Schleifprozess unterworfen, der üblicherweise manuell bzw. von Hand durchgeführt wird, um jegliche Oberflächenschäden in der Karkasse zu beseitigen, bevor etwa ein neuer Laufstreifen im Bereich des Scheitels der Karkasse aufgelegt und mit dieser verbunden wird. Ein solcher manueller Schleifprozess wird durch einen erfahrenen Bediener durchgeführt, der mit geschultem Auge die Karkasse auf Oberflächenschäden absucht und dann die aufgefundenen Oberflächenschäden unter Einsatz verschiedener Schleifwerkzeuge ab- bzw. ausschleift und entfernt und für die anstehende Belegung mit einem neuen Gummistreifen präpariert. Dabei werden Vertiefungen in der Karkasse ausgebildet, die in einem nachfolgenden Schritt aufgefüllt werden. Ein solcher manueller Schleifprozess ist aufwendig, fehleranfällig und erfordert sorgfältig arbeitendes und geschultes Personal, wobei während der Bearbeitung der Oberflächenschäden große Mengen gesundheitsbedenklicher Gummi- und Metallpartikel freigesetzt werden.

Es ist daher bereits verschiedentlich vorgeschlagen worden, das Absuchen der freigelegten Oberfläche der Karkasse auf Oberflächenschäden sowie das Ausschleifen der ermittelten Oberflächenschäden maschinell mithilfe eines robotergeführten Schleifwerkzeuges und entsprechender Sensoren durchzuführen, wozu beispielhaft auf die EP 0 514 162 A2, WO 2010/115711 A1 sowie EP 3 551 443 B1 verwiesen wird, wobei letzterer die Merkmale des Oberbegriffs des unabhängigen Anspruchs 1 offenbart.

Nachteilig bei diesen bekannten automatisch arbeitenden Schleifvorrichtungen ist es jedoch, dass diese trotz der Anordnung entsprechender Sensoren nicht zuverlässig verhindern können, dass der Stahlgürtel im Innern der Karkasse beim Einsatz des Schleifwerkzeuges unerwünscht beschädigt wird, da die Vielzahl der unterschiedlichen Typen von Fahrzeugluftreifen von unterschiedlichen Herstellern eine große Bandbreite der Positionierung und Struktur der verwendeten Stahlgürtel aufweisen. Überdies sind die bekannten automatisch arbeitenden Schleifvorrichtungen nicht in der Lage, auch den der Seitenwand benachbarten Oberflächenbereich und/oder den Wulstbereich der freigelegten Karkasse zu bearbeiten.

Aufgabe der Erfindung ist es daher, ein Verfahren und eine Vorrichtung der eingangs genannten Art vorzuschlagen, die die Nachteile des Standes der Technik überwindet, indem Beschädigungen der Stahlgürtel zuverlässig vermieden werden und eine möglichst vollflächige automatische Bearbeitung der Oberflächenbereiche der Karkasse erfolgen kann.

Zur Lösung der gestellten Aufgabe wird erfindungsgemäß ein Verfahren gemäß den Merkmalen des Patentanspruches 1 vorgeschlagen

Eine Vorrichtung zur Lösung der gestellten Aufgabe ist Gegenstand des Patentanspruchs 6.

Vorteilhafte Ausgestaltungen und Weiterbildungen der Erfindung sind Gegenstand der jeweils abhängigen Ansprüche.

Das im Rahmen der Erfindung vorgeschlagene Verfahren sieht vor, dass eine Datenbank mit spezifischen Daten der Karkassen von Fahrzeugluftreifen nach Reifentyp und Hersteller bereitgestellt wird, die mindestens die Position und Dimensionierung eines Stahlgürtels in der Karkasse umfasst. Vor dem Absuchen der freigelegten Oberfläche des individuell zur Bearbeitung anstehenden Fahrzeugluftreifens werden erfindungsgemäß die spezifischen Daten der Karkasse dieses Fahrzeugluftreifens aus der Datenbank ausgelesen und an den Roboter übermittelt, damit dessen Steuerung ein Ausschleifen der Oberflächenschäden mittels des vom Roboter geführten Schleifwerkzeuges nur an solchen Positionen und in einer solchen Tiefe ausführt, dass der vorhandene Stahlgürtel nicht freigelegt wird.

Die erfindungsgemäß vorgeschlagene Datenbank kann in Form eines Reifenmanagementsystems die erforderlichen Daten der Karkasse eines jeden nach Reifentyp und Hersteller geordneten Verzeichnisses umfassen und diese Daten an den Roboter übermitteln, welcher das Schleifwerkzeug führt. Die erfindungsgemäße Datenbank kann somit Bestandteil der Steuerung des Roboters sein oder aber gesondert zum Roboter bereitgestellt und mit diesem durch entsprechende Kommunikationsmittel verbunden sein.

Nach einem Vorschlag der Erfindung wird vor dem Ausschleifen eines Oberflächenschadens an der Position des Oberflächenschadens zusätzlich auch die Tiefe des Stahlgürtels in Bezug auf die Oberfläche der Karkasse und die Dicke der Karkasse ermittelt, was beispielsweise über entsprechende Sensoren oder über ebenfalls in der Datenbank abgelegte und entsprechend ausgelesene Werte erfolgen kann. Aus diesen Daten wird sodann die Tiefe des zu erstellenden Schleifabtrags berechnet, ohne den Stahlgürtel zu erreichen und diese Tiefe wird an die Steuerung des Roboters übermittelt, um das Ausschleifen bis maximal zur berechneten Tiefe durchzuführen.

Das Absuchen der Oberfläche der Karkasse kann nach einem weiteren Vorschlag der Erfindung mittels eines zweidimensionalen Profilometers erfolgen, wie es handelsüblich erhältlich ist. Beispiele derartiger Profilometer umfassen taktile Taster oder auch berührungslose, vorzugsweise optische Profilometer, die zum Beispiel in Konfokaltechnik, mittels Laserstrahlen oder Weißlichtinterferometrie arbeiten.

Ein solches Profilometer sowie die ggf. weiteren Sensoren können vorteilhaft parallel zum Schleifwerkzeug am Roboter befestigt und von diesem in Reichweite zum auf Oberflächenschäden abzusuchenden Fahrzeugluftreifen gebracht werden.

Der Roboter, welcher das Schleifwerkzeug sowie gegebenenfalls das Profilometer trägt und mit der Datenbank verbunden ist, ist vorzugsweise als 5- Achsenroboter ausgeführt, um hinreichende Beweglichkeit der von diesem geführten Schleifwerkzeuge und des Profilometers sicherzustellen.

Zur weiteren Verbesserung der Qualität der robotergestützt ausgeführten Präparation der Oberfläche der Karkasse wird nach einem weiteren Vorschlag der Erfindung neben der Position des Oberflächenschadens auf der Karkasse auch dessen Tiefe ermittelt und in die Steuerung des Roboters einbezogen, welcher das Schleifwerkzeug trägt.

Nach einem weiteren Vorschlag der Erfindung wird bei einem ersten vollständigen Umlauf des Fahrzeugluftreifens der dem Laufstreifen zugewandte Oberflächenbereich der Karkasse, häufig auch als Scheitel bezeichnet, auf Oberflächenschäden abgesucht und diese in der beschriebenen Weise entfernt. Sodann können in weiteren Umläufen des Fahrzeugluftreifens die den Seitenwänden zugewandten Oberflächenbereiche der Karkasse und/oder der Wulstbereich ebenfalls auf Oberflächenschäden abgesucht werden und diese in der vorangehend geschilderten Weise entfernt werden.

Erfindungsgemäß ist vorgesehen, dass während einer Rotation des Fahrzeugluftreifens auf der drehbaren Nabe die Rotation unterbrochen und angehalten wird, sobald ein Oberflächenschaden ermittelt wird, der sodann bei feststehendem Fahrzeugluftreifen in der bereits beschriebenen Weise entfernt wird. Anschließend wird die Rotation des Fahrzeugluftreifens fortgesetzt, bis der nächste Oberflächenschaden ermittelt und entfernt wird oder aber der vollständige Umlauf des Fahrzeugluftreifens auf der drehbaren Nabe absolviert ist, sodass sämtliche Oberflächenschäden entfernt sind. Der Fachmann wird jedoch erkennen, dass es grundsätzlich auch möglich ist, zunächst im Rahmen eines vollständigen Umlaufs des Fahrzeugluftreifens lediglich die Position und Anzahl der Oberflächenschäden zu ermitteln und in einem nachfolgenden weiteren Umlauf die ermittelten Oberflächenschäden der Reihe nach anzusteuern und mittels des Roboters in der beschriebenen Weise auszuschleifen.

Die im Rahmen der Erfindung vorgeschlagene Vorrichtung zum Präparieren der Oberfläche der Karkasse eines Fahrzeugluftreifens umfasst neben der drehbaren Nabe, der Scanvorrichtung sowie dem vom Roboter geführten Schleifwerkzeug zum Ausschleifen der ermittelten Oberflächenschäden auf der Karkasse des Fahrzeugluftreifens eine Datenbank, die spezifische Daten der Karkassen von unterschiedlichen Fahrzeugluftreifen, gegliedert nach Reifentyp und Hersteller umfasst und mindestens die Position und Dimensionierung des jeweiligen Stahlgürtels in der Karkasse enthält. Die spezifischen Daten der Karkasse eines konkret auf die drehbare Nabe aufgelegten und für die Runderneuerung zu präparieren Fahrzeugluftreifens werden erfindungsgemäß aus der Datenbank ausgelesen und an den Roboter übermittelt, um ein Ausschleifen der Oberflächenschäden vom Roboter mittels des Schleifwerkzeuges nur an Positionen und in einer solchen Tiefe auszuführen, dass der Stahlgürtel gerade nicht freigelegt wird.

Die Scanvorrichtung kann nach einem Vorschlag der Erfindung zum Ermitteln der Tiefe des Stahlgürtels in Bezug auf die Oberfläche der Karkasse und der Dicke der Karkasse an der Position des Oberflächenschadens ausgebildet sein oder aber derartige Daten sind ebenfalls in der Datenbank hinterlegt.

Die Scanvorrichtung der erfindungsgemäßen Vorrichtung kann beispielsweise von einem 2-dimensionalen Profilometer gebildet sein.

Nach einem weiteren Vorschlag der Erfindung wird die Vorrichtung um einen Handlingroboter mit einem robotergeführten Greifer ergänzt, der den Fahrzeugluftreifen auf die drehbare Nabe aufsetzen und von dieser abnehmen kann. Auch der robotergeführte Greifer kann auf einem geeigneten 5-Achsenroboter basieren, der den Handlingroboter bildet.

Somit ist es insbesondere möglich, dass bei auf der drehbaren Nabe aufgespanntem Fahrzeugluftreifen der dem Laufstreifen und den Seitenwänden zugewandte Oberflächenbereich der Karkasse mittels der Scanvorrichtung absuchbar und vom Schleifwerkzeug des Roboters bearbeitbar ist und mittels des Handlingroboters und dessen Greifers der Fahrzeugluftreifen sodann zum Absuchen und Bearbeiten der Wulstbereiche in Reichweite der Scanvorrichtung und des Schleifwerkzeuges positionierbar ist. Demzufolge erfolgt das Absuchen und Bearbeiten des Scheitels und der Seitenwände des Fahrzeugluftreifens, solange dieser auf der drehbaren Nabe gehaltert ist und das Absuchen und Bearbeiten der Wulstbereiche der Karkasse erfolgt mittels des Handlingroboters und von der drehbaren Nabe abgenommenem und im Greifer gehaltertem Fahrzeugluftreifen. Der Handlingroboter positioniert und führt den Fahrzeugluftreifen so an der Scanvorrichtung und dem Schleifwerkzeug des anderen Roboters vorbei, dass ein Absuchen und Bearbeiten von ermittelten Oberflächenschäden erfolgen kann.

Sobald in der beschriebenen Weise nach dem erfindungsgemäßen Verfahren und/oder in der erfindungsgemäßen Vorrichtung die dem Laufstreifen und den Seitenwänden benachbarten Oberflächenbereiche der Karkasse und die Wulstbereiche auf Oberflächenschäden untersucht und diese entfernt worden sind, wird der Fahrzeugluftreifen beispielsweise mittels des robotergeführten Greifers ausgeworfen und an einen Bediener übergeben, der eine manuelle Nachinspektion sowie gegebenenfalls manuelle Nacharbeiten ausführen kann, beispielsweise die Entfernung von Rost sowie das Ausbessern von Löchern und/oder Durchstichen in der Karkasse.

Das erfindungsgemäße Verfahren und die Vorrichtung werden nachfolgend anhand eines Ausführungsbeispiels in der Zeichnung weiter erläutert.

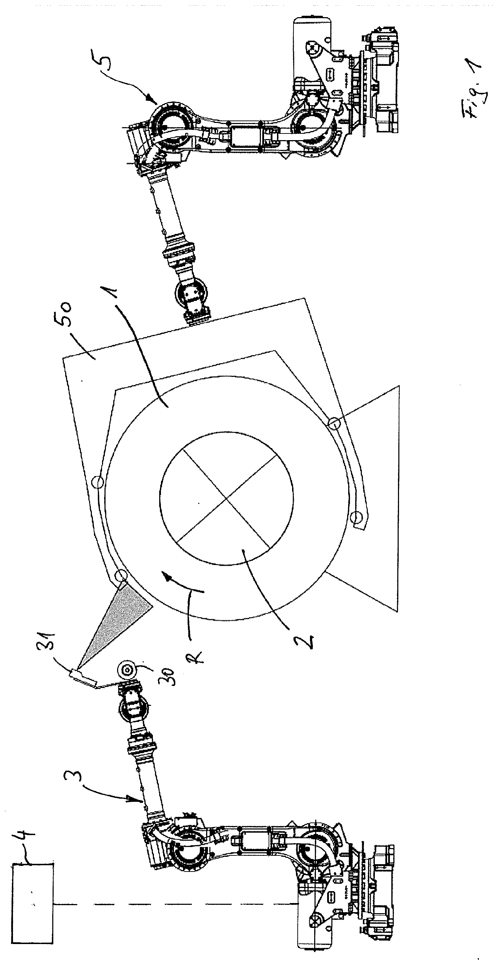

Die einzige Figur zeigt in einer schematischen Darstellung zwei Roboter 3, 5, die jeweils als 5-Achsen Roboter ausgeführt sind und in der Darstellung gemäß Figur 1 einander gegenüberliegend angeordnet sind. Der Roboter 3 führt in der nachstehend noch beschriebenen Weise u.a. ein Schleifwerkzeug 30, während der Roboter 5 als Handlingroboter mit einem Greifer 50 für einen Fahrzeugluftreifen 1 ausgerüstet ist.

Zwischen den beiden Robotern 3,5 ist eine an sich bekannte drehbare Nabe 2 mit nicht näher dargestellten Spannmitteln angeordnet, auf der ein Fahrzeugluftreifen 1 aufgebracht werden kann, nachdem in an sich bekannter Weise in einem vorausgegangenen Arbeitsschritt der verschlissene Laufstreifen sowie die Seitenwände entfernt und insoweit die Karkasse des Fahrzeugluftreifens 1 freigelegt worden ist.

Das Aufbringen des mit freigelegter Karkasse ausgeführten Fahrzeugluftreifens 1 auf die drehbaren Nabe 2 kann vom Roboter 5 bewirkt werden, der zu diesem Zweck den Greifer zum Ergreifen und Manipulieren des Fahrzeugluftreifens 1 trägt und bewegt.

Nachdem der Fahrzeugluftreifen 1 in der dargestellten Weise vom Roboter 5 auf die drehbaren Nabe 2 aufgebracht, gespannt und zentriert worden ist, kann der Fahrzeugluftreifen beispielsweise in der mit Pfeil R angedeuteten Drehrichtung um seine eigene Achse gedreht werden. Es sollte bemerkt werden, dass die Drehrichtung gleichermaßen auch entgegengesetzt sein könnte.

Der dem Roboter 5 gegenüberliegend angeordnete Roboter 3 trägt an seinem freien Ende das an sich bekannte Schleifwerkzeug 30, beispielsweise eine rotierende Schleifscheibe sowie eine Scanvorrichtung für die Oberfläche des Fahrzeugluftreifens 1 in Form eines 2-dimensional abtastenden Profilometers 31.

Mit der nicht näher dargestellten Steuerungseinrichtung des das Schleifwerkzeug 30 führenden Roboters 3 ist überdies eine Datenbank 4 verbunden, in der geordnet nach Reifentyp und Hersteller spezifische Daten der jeweiligen Karkassen von Fahrzeugluftreifen 1 abgelegt sind, die mindestens die Position und Dimensionierung des Stahlgürtels in der jeweiligen Karkasse des Fahrzeugluftreifens 1 umfassen.

Nachdem der Fahrzeugluftreifen 1 auf die Nabe 2 aufgebracht worden ist, werden insoweit die entsprechenden in der Datenbank 4 abgelegten Daten zu diesem Fahrzeugluftreifen 1 von der Steuerung des Roboters 3 abgerufen und in der nachfolgenden Steuerung des Roboters 3 in der noch beschriebenen Weise berücksichtigt.

Sobald der Fahrzeugluftreifen 1 auf der Nabe 2 in Rotation versetzt worden ist, scannt das Profilometer 31 die Oberfläche, hier den Scheitelbereich der Karkasse, die dem entfernten Laufstreifen zugewandt ist, auf mögliche Oberflächenbeschädigungen.

Sobald eine solche Oberflächenbeschädigung detektiert bzw. ermittelt worden ist, wird die Rotation des Fahrzeugluftreifens 1 auf der Nabe 2 unterbrochen und der Roboter 3 fährt das Schleifwerkzeug 30 an die Position der ermittelten Oberflächenbeschädigung heran. Mithilfe der aus der Datenbank 4 ausgelesenen Daten zur Position und Dimensionierung des Stahlgürtels in der Karkasse und des ermittelten Schadensbildes berechnet sodann die Steuerung des Roboters 3 die Tiefe und Ausdehnung des mittels des Schleifwerkzeuges 30 zu entfernenden Gummimaterials der Karkasse, um die Oberfläche für die spätere Runderneuerung zu präparieren. Hierbei kann zusätzlich auch die Tiefe des Stahlgürtels und die vorherrschende Dicke der Karkasse, d. h. des Gummimaterials an der Position des Oberflächenschadens mittels entsprechender Sensoren ermittelt und in die Berechnung mit einbezogen werden. Der Roboter 3 verfügt darüber hinaus über einen nicht näher dargestellten Detektor für Stahldrähte und einen Oberflächenpositionssensor, die ebenfalls permanent am Arm des Roboters 3 befestigt sind.

Im Zuge der berechneten Ausschleifung des ermittelten Oberflächenschadens erzeugt das Schleifwerkzeug 30 durch Führung mittels des Roboters 3 einen Krater bzw. eine Vertiefung in der Oberfläche der Karkasse, wobei zuverlässig lediglich Gummimaterial der Karkasse entfernt wird, ohne dass es zu einer Beschädigung des Stahlgürtels und der strukturellen Integrität der Karkasse kommt.

Sobald das Ausschleifen des ermittelten Oberflächenschadens abgeschlossen ist, bringt der Roboter 3 das Schleifwerkzeug 30 wieder auf Abstand zur Oberfläche der Karkasse des Fahrzeugluftreifens 1 und die Rotation desselben auf der Nabe 2 sowie das Absuchen der Oberfläche des Fahrzeugluftreifens mittels des Profilometers 31 werden fortgesetzt, bis ein weiterer Oberflächenschaden ermittelt und in der bereits beschriebenen Weise bearbeitet wird oder der Fahrzeugluftreifen einen vollständigen Umlauf auf der drehbaren Nabe 2 um seine eigene Achse absolviert hat, d. h. einmal um 360° rotiert ist, sodass sämtliche Oberflächenschäden ermittelt und entfernt worden sind.

Die entsprechende Operation kann sodann während eines weiteren Durchlaufs bzw. Umlaufs des Fahrzeugluftreifens 1 um seine eigene Achse auf der Nabe 2 auch im Bereich beider den Seitenwänden zugewandten Oberflächenbereiche der Karkasse des Fahrzeugluftreifens 1 durchgeführt werden, um auch diese Bereiche auf mögliche Oberflächenschäden abzusuchen und diese zu bearbeiten.

Anschließend kann der Fahrzeugluftreifen 1 mittels des Greifers 50 vom Roboter 5 wieder von der Nabe 2 abgenommen werden und im Greifer 50 so gehalten und am Roboters 3 vorbeigeführt werden, dass mittels des Profilometers 31 auch die Wulstbereiche des Fahrzeugluftreifens 1 auf Beschädigungen untersucht und gegebenenfalls mittels des Schleifwerkzeuges 30 entfernt werden können.

Nachdem auf diese Weise die Karkasse des Fahrzeugluftreifens 1 unter Berücksichtigung der in der Datenbank 4 abgelegten spezifischen Daten vollständig auf Oberflächenschäden abgesucht und die ermittelten Oberflächenschäden entfernt worden sind, kann der Fahrzeugluftreifen 1 vom Roboter 5 an eine nachgeordnete Einrichtung übergeben werden, in der beispielsweise eine manuelle Nachinspektion und/oder eine manuelle Nachbearbeitung durch einen Bediener erfolgen kann, um zum Beispiel Rost zu entfernen und Durchstiche sowie Löcher auszubessern.

Durch Berücksichtigung der in der Datenbank abgelegten spezifischen Daten der Karkassen von Fahrzeugluftreifen ist sichergestellt, dass das erfindungsgemäße Verfahren und die Vorrichtung trotz des Einsatzes von Robotern eine Bearbeitung lediglich im Bereich des Gummimaterials der Karkasse durchführen und unerwünschte Beschädigungen des innenliegenden Stahlgürtels sowie einzelner Stahldrähte zuverlässig ausgeschlossen werden.

Das vorangehend beschriebene Verfahren und die Vorrichtung kann auf sämtliche zur Runderneuerung anstehende Fahrzeugluftreifen angewendet werden, beispielsweise Fahrzeugluftreifen für Personenkraftwagen, Lastwagen sowie Lieferwagen und eignet sich sowohl für Anwendungen im Rahmen der heißen und kalten Runderneuerung.

### Bezugszeichenliste:

- 1:: Fahrzeugluftreifen
- 2:: Nabe
- 3:: Roboter
- 4:: Datenbank
- 5:: Roboter
- 30:: Schleifwerkzeug
- 31:: Profilometer
- 50:: Greifer

- R:: Rotationsrichtung

## Patentansprüche

1. Verfahren zum Präparieren der Oberfläche der Karkasse eines Fahrzeugluftreifens (1) im Zuge einer Runderneuerung desselben, umfassend die Schritte des Entfernens des Laufstreifens und der Seitenwand des Fahrzeugluftreifens (1) unter Freilegung der Karkasse und des Aufspannens des Fahrzeugluftreifens (1) auf eine drehbare Nabe (2) und anschließendem Absuchen der freigelegten Oberfläche der Karkasse auf Oberflächenschäden während einer Rotation des Fahrzeugluftreifens (1), wobei bei Auffinden eines Oberflächenschadens die Rotation des Fahrzeugluftreifens (1) vorübergehend gestoppt und mittels eines von einem Roboter (3) geführten Schleifwerkzeuges (30) der ermittelte Oberflächenschaden unter Erzeugung einer Vertiefung in der Oberfläche der Karkasse entfernt wird und anschließend die Rotation des Fahrzeugluftreifens (1) und das Absuchen der Oberfläche auf Oberflächenschäden fortgesetzt wird, bis ein vollständiger Umlauf des Fahrzeugluftreifens (1) auf der drehbaren Nabe (2) absolviert ist und die Oberflächenschäden entfernt sind, **dadurch gekennzeichnet, dass** eine Datenbank (4) mit spezifischen Daten der Karkassen von Fahrzeugluftreifen (1) nach Reifentyp und Hersteller bereitgestellt wird, die mindestens die Position und Dimensionierung eines Stahlgürtels in der Karkasse umfasst und vor dem Absuchen der freigelegten Oberfläche des Fahrzeugluftreifens (1) die spezifischen Daten der Karkasse aus der Datenbank (4) ausgelesen und an den Roboter (3) übermittelt werden und ein Entfernen der Oberflächenschäden vom Roboter (3) mittels des Schleifwerkzeuges (30) nur an Positionen und in einer solchen Tiefe ausgeführt wird, dass der Stahlgürtel nicht freigelegt wird.

2. Verfahren nach Anspruch 1, **dadurch gekennzeichnet, dass** vor dem Ausschleifen eines Oberflächenschadens an der Position des Oberflächenschadens die Tiefe des Stahlgürtels in Bezug auf die Oberfläche der Karkasse und die Dicke der Karkasse ermittelt und die Tiefe der zu erstellenden Ausschleifung berechnet und an den Roboter (3) übermittelt werden.

3. Verfahren nach Anspruch 1 oder 2, **dadurch gekennzeichnet, dass** die Oberfläche der Karkasse mittels eines zweidimensionalen Profilometers (31) abgesucht wird.

4. Verfahren nach einem der Ansprüche 1 bis 3, **dadurch gekennzeichnet, dass** neben der Position eines Oberflächenschadens auf der Karkasse auch dessen Tiefe ermittelt wird.

5. Verfahren nach einem der Ansprüche 1 bis 4, **dadurch gekennzeichnet, dass** in einem ersten vollständigen Umlauf des Fahrzeugluftreifens (1) der der Lauffläche zugewandte Oberflächenbereich der Karkasse auf Oberflächenschäden abgesucht und diese entfernt werden und anschließend in weiteren Umläufen die den Seitenwänden zugewandten Oberflächenbereiche der Karkasse und/oder der Wulstbereich auf Oberflächenschäden abgesucht und diese entfernt werden.

6. Vorrichtung zum Präparieren der Oberfläche der Karkasse eines Fahrzeugluftreifens (1) im Zuge einer Runderneuerung desselben, umfassend eine drehbare Nabe (2), auf der ein Fahrzeugluftreifen (1) mit durch Entfernung von Laufstreifen und Seitenwänden freigelegter Karkasse aufspannbar ist und eine Scanvorrichtung zum Absuchen der freigelegten Oberfläche der Karkasse auf Oberflächenschäden während einer Rotation des Fahrzeugluftreifens (1) sowie ein von einem Roboter (3) geführtes Schleifwerkzeug (30) zum Ausschleifen der ermittelten Oberflächenschäden unter Erzeugung einer Vertiefung in der Oberfläche der Karkasse, **dadurch gekennzeichnet, dass** die Vorrichtung eine Datenbank (4) enthaltend spezifische Daten der Karkassen von Fahrzeugluftreifen (1) nach Reifentyp und Hersteller umfasst, die mindestens die Position und Dimensionierung des Stahlgürtels in der Karkasse umfasst und die spezifischen Daten der Karkasse eines Fahrzeugluftreifens (1) aus der Datenbank auslesbar und an den Roboter (3) übermittelbar sind, um ein Ausschleifen der Oberflächenschäden vom Roboter (3) mittels des Schleifwerkzeuges (30) nur an Positionen und in einer solchen Tiefe auszuführen, dass der Stahlgürtel nicht freigelegt wird.

7. Vorrichtung nach Anspruch 6, dass die Scanvorrichtung zum Ermitteln der Tiefe des Stahlgürtels in Bezug auf die Oberfläche der Karkasse und der Dicke der Karkasse an der Position des Oberflächenschadens ausgebildet ist.

8. Vorrichtung nach einem der Ansprüche 6 oder 7, **dadurch gekennzeichnet, dass** die Scanvorrichtung von einem zweidimensionalen Profilometer (31) gebildet ist.

9. Vorrichtung nach einem der Ansprüche 6 bis 8, **dadurch gekennzeichnet, dass** der Fahrzeugluftreifen (1) mittels eines robotergeführten Greifers (50) auf die drehbare Nabe (2) aufgesetzt und von dieser abnehmbar ist.

10. Vorrichtung nach Anspruch 9, **dadurch gekennzeichnet, dass** bei auf der drehbaren Nabe (2) aufgespanntem Fahrzeugluftreifen (1) der der Lauffläche und den Seitenwänden zugewandte Oberflächenbereich der Karkasse mittels der Scanvorrichtung absuchbar und vom Schleifwerkzeug (30) bearbeitbar ist und mittels des Greifers (50) der Fahrzeugluftreifen (1) zum Absuchen und Bearbeiten der Wulstbereiche in Reichweite der Scanvorrichtung und des Schleifwerkzeuges (30) positionierbar ist.

## Claims

1. Method for preparing the surface of the carcass of a pneumatic vehicle tyre (1) during retreading of the same, comprising the steps of removing the tread and the sidewall of the pneumatic vehicle tyre (1), with the carcass being exposed, and clamping the pneumatic vehicle tyre (1) onto a rotatable hub (2) and subsequently searching the exposed surface of the carcass for surface damage during rotation of the pneumatic vehicle tyre (1), wherein, when surface damage is discovered, the rotation of the pneumatic vehicle tyre (1) is temporarily stopped and the determined surface damage is removed by means of a grinding tool (30) guided by a robot (3), with a depression being produced in the surface of the carcass, and then the rotation of the pneumatic vehicle tyre (1) and the searching of the surface for surface damage are continued until a full revolution of the pneumatic vehicle tyre (1) on the rotatable hub (2) has been completed and the surface damage removed, **characterized in that** a database (4) with specific data of the carcasses of pneumatic vehicle tyres (1) according to tyre type and manufacturer is provided, comprising at least the position and dimensioning of a steel belt in the carcass and, before the exposed surface of the pneumatic vehicle tyre (1) is searched, the specific data of the carcass are read from the database (4) and transmitted to the robot (3), and the surface damage is removed by the robot (3) by means of the grinding tool (30) only at positions and to such a depth that the steel belt is not exposed.

2. Method according to Claim 1, **characterized in that**, before surface damage is ground out, at the position of the surface damage the depth of the steel belt in relation to the surface of the carcass and the thickness of the carcass is determined and the depth of the ground-out portion to be created is calculated and transmitted to the robot (3).

3. Method according to Claim 1 or 2, **characterized in that** the surface of the carcass is searched by means of a two-dimensional profilometer (31).

4. Method according to one of Claims 1 to 3, **characterized in that**, apart from the position of surface damage on the carcass, its depth is also determined.

5. Method according to one of Claims 1 to 4, **characterized in that**, in a first full revolution of the pneumatic vehicle tyre (1), the surface region of the carcass that is facing the running surface is searched for surface damage and any such damage is removed and subsequently, in further revolutions, the surface regions of the carcass that are facing the sidewalls and/or the bead region are searched for surface damage and any such damage is removed.

6. Device for preparing the surface of the carcass of a pneumatic vehicle tyre (1) during retreading, comprising a rotatable hub (2), on which a pneumatic vehicle tyre (1) with the carcass exposed by removal of the tread and sidewalls can be clamped, and a scanning device for searching the exposed surface of the carcass for surface damage during rotation of the pneumatic vehicle tyre (1) and also a grinding tool (30) guided by a robot (3) for grinding out the determined surface damage, with a depression being produced in the surface of the carcass, **characterized in that** the device comprises a database (4) containing specific data of the carcasses of pneumatic vehicle tyres (1) according to tyre type and manufacturer, comprising at least the position and dimensioning of the steel belt in the carcass, and the specific data of the carcass of a pneumatic vehicle tyre (1) can be read from the database and transmitted to the robot (3) in order to grind out the surface damage by the robot (3) by means of the grinding tool (30) only at positions and to such a depth that the steel belt is not exposed.

7. Device according to Claim 6, that the scanning device is designed for determining the depth of the steel belt in relation to the surface of the carcass and the thickness of the carcass at the position of the surface damage.

8. Device according to either of Claims 6 and 7, **characterized in that** the scanning device is formed by a two-dimensional profilometer (31).

9. Device according to one of Claims 6 to 8, **characterized in that** the pneumatic vehicle tyre (1) can be placed onto the rotatable hub (2) and can be removed from it by means of a robot-guided gripper (50).

10. Device according to Claim 9, **characterized in that**, with a pneumatic vehicle tyre (1) clamped on the rotatable hub (2), the surface region of the carcass that is facing the running surface and the sidewalls can be searched by means of the scanning device and can be worked by the grinding tool (30) and the pneumatic vehicle tyre (1) can be positioned by means of the gripper (50) within the range of the scanning device and the grinding tool (30) for searching and working the bead regions.

## Revendications

1. Procédé permettant de préparer la surface de la carcasse d'un pneu de véhicule (1) au cours du rechapage de celui-ci, comprenant les étapes consistant à retirer la bande de roulement et le flanc du pneu de véhicule (1) en dégageant la carcasse, et à installer le pneu de véhicule (1) sur un moyeu tournant (2), et à examiner ensuite la surface dégagée de la carcasse quant à des dommages de surface pendant une rotation du pneu de véhicule (1), dans lequel, si un dommage de surface est trouvé, la rotation du pneu de véhicule (1) est arrêtée momentanément, et le dommage de surface établi est retiré en créant un creux dans la surface de la carcasse au moyen d'un outil abrasif (30) guidé par un robot (3), et ensuite, la rotation du pneu de véhicule (1) et l'examen de la surface quant à des dommages de surface continuent jusqu'à qu'un tour complet du pneu de véhicule (1) sur le moyeu tournant (2) ait été réalisé et les dommages de surface aient été retirés, **caractérisé en ce qu'**une base de données (4) avec des données spécifiques des carcasses de pneus de véhicule (1) par type de pneu et fabricant est fournie qui comprend au moins la position et le dimensionnement d'une ceinture d'acier dans la carcasse, et avant l'examen de la surface dégagée du pneu de véhicule (1), les données spécifiques de la carcasse sont lues dans la base de données (4) et transmises au robot (3), et un retrait des dommages de surface est effectué par le robot (3) au moyen de l'outil abrasif (30) uniquement dans des positions et à une profondeur telles que la ceinture d'acier ne soit pas dégagée.

2. Procédé selon la revendication 1, **caractérisé en ce qu'**avant l'abrasion d'un dommage de surface dans la position du dommage de surface, la profondeur de la ceinture d'acier par rapport à la surface de la carcasse et l'épaisseur de la carcasse sont établies, et la profondeur de l'abrasion à créer est calculée et transmise au robot (3).

3. Procédé selon la revendication 1 ou 2, **caractérisé en ce que** la surface de la carcasse est examinée au moyen d'un profilomètre (31) bidimensionnel.

4. Procédé selon l'une quelconque des revendications 1 à 3, **caractérisé en ce qu'**en plus de la position d'un dommage de surface sur la carcasse, sa profondeur est également établie.

5. Procédé selon l'une quelconque des revendications 1 à 4, **caractérisé en ce que** pendant un premier tour complet du pneu de véhicule (1), la zone de surface de la carcasse, tournée vers la surface de roulement, est examinée quant à des dommages de surface, et ceux-ci sont retirés, et ensuite, pendant d'autres tours, les zones de surface de la carcasse, tournées vers les flancs et/ou la zone de talon sont examinées quant à des dommages de surface, et ceux-ci sont retirés.

6. Dispositif permettant de préparer la surface de la carcasse d'un pneu de véhicule (1) au cours du rechapage de celui-ci, comprenant un moyeu tournant (2) sur lequel un pneu de véhicule (1) pourvu d'une carcasse dégagée par le retrait de la bande de roulement et des flancs peut être installé, et un dispositif de balayage pour examiner la surface dégagée de la carcasse quant à des dommages de surface pendant une rotation du pneu de véhicule (1), ainsi qu'un outil abrasif (30) guidé par un robot (3) pour abraser les dommages de surface établis en créant un creux dans la surface de la carcasse, **caractérisé en ce que** le dispositif comprend une base de données (4) contenant des données spécifiques des carcasses de pneus de véhicule (1) par type de pneu et fabricant, qui comprend au moins la position et le dimensionnement de la ceinture d'acier dans la carcasse, et les données spécifiques de la carcasse d'un pneu de véhicule (1) peuvent être lues dans la base de données et transmises au robot (3) pour effectuer une abrasion des dommages de surface par le robot (3) au moyen de l'outil abrasif (30) uniquement dans des positions et à une profondeur telles que la ceinture d'acier ne soit pas dégagée.

7. Dispositif selon la revendication 6, **caractérisé en ce que** le dispositif de balayage est réalisé pour établir la profondeur de la ceinture d'acier par rapport à la surface de la carcasse et l'épaisseur de la carcasse dans la position du dommage de surface.

8. Dispositif selon l'une quelconque des revendications 6 ou 7, **caractérisé en ce que** le dispositif de balayage est formé par un profilomètre (31) bidimensionnel.

9. Dispositif selon l'une quelconque des revendications 6 à 8, **caractérisé en ce que** le pneu de véhicule (1) est posé sur le moyeu tournant (2) et peut être retiré de celui-ci au moyen d'un préhenseur (50) robotisé.

10. Dispositif selon la revendication 9, **caractérisé en ce que** lorsque le pneu de véhicule (1) est installé sur le moyeu tournant (2), la surface supérieure de la carcasse, tournée vers la surface de roulement et les flancs, peut être examinée au moyen du dispositif de balayage et peut être usinée par l'outil abrasif (30), et le pneu de véhicule (1) peut être positionné au moyen du préhenseur (50) pour examiner et usiner les zones de talon à la portée du dispositif de balayage et de l'outil abrasif (30).
